# EUROPEAN PATENT APPLICATION

(11) **EP 4 804 510 A1**
(43) Date of publication of application: **09.09.2026**
(21) Application number: 25196331.0
(22) Date of filing: 18.08.2025
(51) Int. Cl.: H04N 1/60, H04N 1/62

(54) **INFORMATION PROCESSING SYSTEM, INFORMATION PROCESSING PROGRAM, AND INFORMATION PROCESSING METHOD**

(30) Priority: 04.03.2025 JP 2025033465
(71) Applicant: Fujifilm Business Innovation Corp., Tokyo 107-0052 (JP)
(72) Inventor: TONOUCHI, Masaharu, Yokohama (JP); SUGAWARA, Masafumi, Yokohama (JP); OTAKI, Masanobu, Yokohama (JP)
(74) Representative: Meissner Bolte Partnerschaft mbB

(57) **Abstract**

An information processing system includes a processor configured to: create learning data in which a temperature and a humidity in a room where a printed material is produced on which an image represented by image data is printed using a printer are associated with a color correction setting value used to make a color of an image in the printed material closer to a color shown by the image data; and generate, by machine learning using the learning data, a generative model that upon input of the temperature and the humidity included in the learning data, generates the color correction setting value associated with the temperature and the humidity which have been input.

## Description

### Background

### (i) Technical Field

The present disclosure relates to an information processing system, an information processing program, and an information processing method.

### (ii) Related Art

Japanese Unexamined Patent Application Publication No. 2020-195127 discloses an image processing apparatus including: an acquisition unit that acquires image data; a first gradation correction unit that obtains a dark channel value for each area in the image data to estimate transmittance and correct the gradation; a second gradation correction unit that corrects the gradation of the image data using a tone curve; and a control unit that controls use of a gradation correction unit to be used.

### Summary

For example, the color space in the image data and the color space that can be reproduced by printing using color materials are different, thus a color specified by the image data may not be reproduced faithfully in a printed material. Therefore, a printer has a color correction function that uses e.g., a color correction setting value represented by a tone curve to make the color of each image in the printed material closer to a specified color.

Also, sense and preference to a color varies with each customer. Therefore, each printing plant has an expert who visually checks the color of each image on a printed material obtained by test printing, and manually generates a color correction setting value. Generation of such a color correction setting value requires experience and intuition, and it is difficult for a non-expert to generate a color correction setting value.

In printing plants, experts who can generate color correction setting values are aging, and the number of young employees to the printing industry is reducing due to a decrease in the number of children. Thus, a situation may occur in which the technique related to generation of color correction setting value is not well succeeded.

Accordingly, it is an object of the present disclosure to provide an information processing system, an information processing program, and an information processing method that enable a non-expert not engaged in generation of color correction setting values to generate color correction setting values.

According to a first aspect of the present disclosure, there is provided an information processing system including a processor configured to: create learning data in which a temperature and a humidity in a room where a printed material is produced on which an image represented by image data is printed using a printer are associated with a color correction setting value used to make a color of an image in the printed material closer to a color shown by the image data; and generate, by machine learning using the learning data, a generative model that upon input of the temperature and the humidity included in the learning data, generates the color correction setting value associated with the temperature and the humidity which have been input.

An information processing system according to a second aspect is the information processing system according to the first aspect in which a name of a country where the printed material is distributed is added to the learning data, and the processor is configured to generate, by machine learning, a generative model that, upon input of the temperature, the humidity, and the name of the country included in the learning data, generates the color correction setting value associated with the temperature, the humidity, and the name of the country which have been input.

An information processing system according to a third aspect is the information processing system according to the first aspect in which a race of people as a distribution target of the printed material is added to the learning data, and the processor is configured to generate, by machine learning, a generative model that, upon input of the temperature, the humidity, and the race included in the learning data, generates the color correction setting value associated with the temperature, the humidity, and the race which have been input.

An information processing system according to a fourth aspect is the information processing system according to any one of the first to third aspects in which the processor is configured to use, for machine learning of the generative model, the learning data including the color correction setting value with an evaluation value which is set based on a degree of similarity between a color of an image in the printed material and a color shown by the image data, and is higher than or equal to a predetermined threshold value.

An information processing system according to a fifth aspect is the information processing system according to the fourth aspect in which the evaluation value of the color correction setting value is set by an orderer of the printed material.

An information processing system according to a sixth aspect includes a processor configured to perform machine learning using learning data in which a temperature and a humidity in a room where a printed material is produced on which an image represented by image data is printed using a printer are associated with a color correction setting value used to make a color of an image in the printed material closer to a color shown by the image data; create a generative model by the machine learning, which generates the color correction setting value based on the temperature and the humidity; and generate, using the generative model, the color correction setting value used for new production of the printed material based on the temperature and the humidity at a time of new production of the printed material.

An information processing system according to a seventh aspect is the information processing system according to the sixth aspect in which the processor is configured to, by machine learning using the learning data to which a name of a country where the printed material is distributed is added, create an expanded generative model in which the generative model is expanded so as to generate the color correction setting value based on the temperature, the humidity, and the name of the country; and generate, using the expanded generative model, the color correction setting value used for new production of the printed material based on the temperature and the humidity at a time of new production of the printed material, and the name of the country where the printed material is newly distributed.

An information processing system according to an eighth aspect is the information processing system according to the sixth aspect in which the processor is configured to, by machine learning using the learning data to which a race of people as a distribution target of the printed material is added, create an expanded generative model in which the generative model is expanded so as to generate the color correction setting value based on the temperature, the humidity, and the race; and generate, using the expanded generative model, the color correction setting value used for new production of the printed material based on the temperature and the humidity at a time of new production of the printed material, and the race of people as a distribution target of the printed material.

An information processing system according to a ninth aspect is the information processing system according to any one of the sixth to eighth aspects in which the generative model is generated by machine learning using the learning data including the color correction setting value with an evaluation value which is set based on a degree of similarity between a color of an image in the printed material and a color shown by the image data, and is higher than or equal to a predetermined threshold value.

An information processing system according to a tenth aspect is the information processing system according to the ninth aspect in which the evaluation value of the color correction setting value is set by an orderer of the printed material.

An information processing program according to an eleventh aspect causes a computer to execute a process comprising: creating learning data in which a temperature and a humidity in a room where a printed material is produced on which an image represented by image data is printed using a printer are associated with a color correction setting value used to make a color of an image in the printed material closer to a color shown by the image data; and generating, by machine learning using the learning data, a generative model that, upon input of the temperature and the humidity included in the learning data, generates the color correction setting value associated with the temperature and the humidity which have been input.

An information processing program according to a twelfth aspect causes a computer to execute a process comprising: performing machine learning using learning data in which a temperature and a humidity in a room where a printed material is produced on which an image represented by image data is printed using a printer are associated with a color correction setting value used to make a color of an image in the printed material closer to a color shown by the image data; using a generative model generated by the machine learning, that generates the color correction setting value based on the temperature and the humidity; and generating the color correction setting value used for new production of the printed material based on the temperature and the humidity at a time of new production of the printed material.

An information processing method according to a thirteenth aspect includes: creating learning data in which a temperature and a humidity in a room where a printed material is produced on which an image represented by image data is printed using a printer are associated with a color correction setting value used to make a color of an image in the printed material closer to a color shown by the image data; and generating, by machine learning using the learning data, a generative model that, upon input of the temperature and the humidity included in the learning data, generates the color correction setting value associated with the temperature and the humidity which have been input.

According to the first aspect, the sixth aspect, the eleventh aspect, and the twelfth aspect, and the thirteenth aspect, the effect is created that color correction setting values can be generated by a non-expert who is not engaged in generation of color correction setting values.

According to the second aspect and the third aspect, the effect is created that a generative model can be obtained, which generates a color correction setting value that achieves a printing color according to the preference of an orderer rather than a generative model that has performed machine learning using temperature and humidity as input data.

According to the fourth aspect, the effect is created that a generative model can be obtained, which generates a color correction setting value with a higher evaluation value than the evaluation value when learning data to be used for machine learning of a generative model is selected without considering the evaluation value of each color correction setting value.

According to the fifth aspect, the effect is created that a generative model can be obtained, which generates a color correction setting value that reflects the evaluation of the colors of the printed material by an orderer.

According to the seventh aspect and the eighth aspect, the effect is created that a color correction setting value can be generated, which achieves a printing color according to the preference of an orderer rather than a color correction setting value generated based on the temperature and humidity.

According to the ninth aspect, the effect is created that a color correction setting value can be obtained, which is higher in evaluation value than the color correction setting value generated using a generative model trained by machine learning without considering the evaluation value of each color correction setting value.

According to the tenth aspect, the effect is created that a color correction setting value can be generated, which reflects the evaluation of the colors of the printed material by an orderer.

### Brief Description of the Drawings

Exemplary embodiments of the present disclosure will be described in detail based on the following figures, wherein:
Fig. 1 is a diagram illustrating a functional configuration example of an information processing system;
Fig. 2 is a graph illustrating an example of a tone curve;
Fig. 3 is a diagram illustrating a major part configuration example of an electrical system of the information processing system;
Fig. 4 is a flowchart illustrating an example of a flow of a learning process of a generative model; and
Fig. 5 is a flowchart illustrating an example of a flow of a generation process of a tone curve.

### Detailed Description

Hereinafter, an exemplary embodiment will be described with reference to the drawings. Note that the same components and the same processes are labeled with the same symbol in the entire drawings, and a redundant description will be omitted. The dimensional ratio in the drawings is exaggerated for the sake of the explanation, and may be different from the actual ratio.

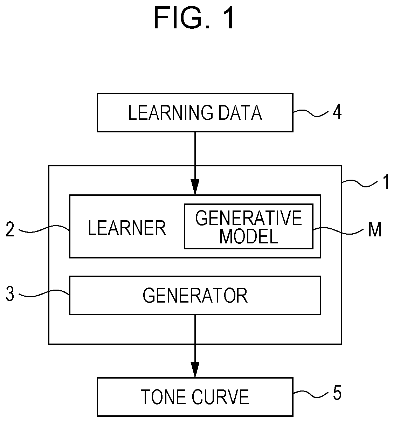

Fig. 1 is a diagram illustrating a functional configuration example of an information processing system 1. As illustrated in Fig. 1, the information processing system 1 includes a learner 2 and a generator 3.

The information processing system 1 generates a color correction setting value by the processes of the learner 2 and the generator 3, the color correction setting value being used for color adjustment of the image data input to an image forming apparatus (illustration is omitted) which is an example of a printer. The image forming apparatus makes color adjustment of image data using the color correction setting value generated by the information processing system 1. The color adjustment includes adjustment of e.g., hue, chroma and brightness.

For the purpose of illustration, the information processing system 1 is referred to as the "system 1". In the present disclosure, generation of a color correction setting value in the information processing system 1 will be described using an example of generation of a tone curve 5 which is an example of a color correction setting value.

The learner 2 uses a large number of pieces of learning data 4 prepared in advance to perform machine learning for a generative model M that generates the tone curve 5.

The machine learning is a process such that a computer itself learns the causal association between pieces of data in given sample data to generate a model representing the causal association between the pieces of data. Therefore, the greater the number of pieces of given sample data, the causal association between the pieces of data in the sample data is more likely to be properly learned. The sample data used for the machine learning is learning data 4.

Even when the value of an item having an effect on the printing color of a recording medium changes, if the tone curve 5 is obtained, which makes the printing color of the recording medium closer to the color specified by a customer according to the change of the value, the printing color of the recording medium can be made closer to the color specified by the customer regardless of the change of the value of the item.

However, there are multiple items to be taken into consideration for that purpose, and the items are related to each other in a complicated manner. Therefore, it is often difficult to physically formulate a relationship between the items having an effect on the printing color of the recording medium and a desired tone curve 5. Thus, in the present disclosure, the relationship between the items having an effect on the printing color of the recording medium and the desired tone curve 5 is obtained by machine learning using the learning data 4 which associates the items having an effect on the printing color of the recording medium with the desired tone curve 5. Note that the customer is an example of an orderer of a printed material.

The tone curve 5 forming the learning data 4 is manually generated by an expert (hereinafter referred to as a "skilled worker") who generates the tone curve 5. Specifically, a skilled worker generates the tone curve 5 based on experience and intuition in consideration of the items having an effect on the printing color of the recording medium, in other words, the values of influential factors.

In this manner, the learning data 4 is such data that associates the influential factors with the tone curve 5 generated by a skilled worker based on the values of the influential factors. In the learning data 4, the influential factors are input data. In the learning data 4, the tone curve 5 associated with the influential factors is training data.

The learner 2 uses the learning data 4 prepared in advance like this to perform machine learning for the generative model M that, upon input of the influential factors of each learning data 4, outputs the tone curve 5 included in the same learning data 4 as for the input influential factors. The generative model M is such model that represents the causal association between the influential factors and the tone curve 5 based on the relationship between the influential factors and the tone curve 5 included in the learning data 4.

The technique of machine learning of the generative model M in this manner using the learning data 4 in which input data is associated with desired training data is referred to as "supervised machine learning".

The supervised machine learning includes publicly known techniques such as linear recurrence, logistic regression, random forest, boosting, support vector machine, deep learning, and autoregressive model. As an example, the learner 2 according to the present disclosure performs machine learning of the generative model M using the deep learning. The deep learning is an example of a neural network in which an intermediate layer (also referred to as a "hidden layer") includes multiple layers. For example, a convolution neural network (CNN) is an example of deep learning. Needless to say, the learner 2 may use publicly known supervised machine learning such as support vector machine instead of CNN.

The generator 3 generates the tone curve 5 to be used to print the printed material for which a new order has been accepted from a customer. Specifically, the generator 3 inputs the values of influential factors at the time of producing a new printed material to the generative model M obtained by machine learning by the learner 2. The generative model M generates a tone curve 5 that, for the input value of an influential factor, makes the printing color of the recording medium closer to the color specified by a customer. The generator 3 outputs the tone curve 5 generated by the generative model M to the image forming apparatus.

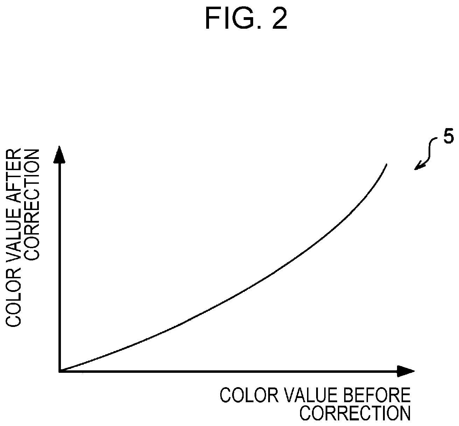

Fig. 2 is a graph illustrating an example of the tone curve 5. The horizontal axis in Fig. 2 shows the color value of an image before correction, that is, the color value before correction. The vertical axis in Fig. 2 shows the color value of an image after correction, that is, the color value after correction. The color value before correction can be corrected to a target color value by changing the curve of the tone curve 5.

The image forming apparatus uses color materials to perform printing on the recording medium, thus finally converts the image data to CMYK data. "C" represents cyan, "M" represents magenta, "Y" represents yellow, and "K" represents black. Thus, the tone curve 5 makes correction to the CMYK data which is an example of color values. Thus, the tone curve 5 is generated for each color of CMYK.

Note that the tone curve 5 may correct a color value other than the CMYK data. For example, when the image to be printed on the recording medium is a photograph, the color values of the photograph is often represented by RGB data. Therefore, the tone curve 5 may be generated, which corrects the RGB data before being converted to CMYK data. In the present disclosure, as an example, a description will be given assuming that the generative model M corrects the CMYK data.

In the present disclosure, as an example of an influential factor, the temperature and humidity in the room where a printed material is produced, in other words, the temperature and humidity in the room where the image forming apparatus is installed are used.

In the image forming apparatus, heat is applied to the recording medium on which an image is formed by a color material such as toner so that the image is fixed to the recording medium. Therefore, when the temperature in the room changes, the melting point and the like of the color material change. As a result, the printing color of the recording medium may deviate from the color specified by a customer.

Although paper is often used as the recording medium, when the temperature in the room changes, the amount of moisture absorbed by the recording medium changes. When the amount of moisture absorbed by the recording medium changes, uneven fixing of the color material to be fixed to the recording medium is likely to occur. When toner is used as a color material, the image forming apparatus utilizes static electricity to transfer the toner to the recording medium. When the humidity in the room changes, the charge amount of the photoreceptor causing toner to adhere thereto by static electricity changes. As a result, the printing color of the recording medium may deviate from the color specified by a customer. Therefore, the temperature and the humidity are an example of an influential factor.

The system 1 that executes the above-mentioned process is constructed using e.g., a computer 10.

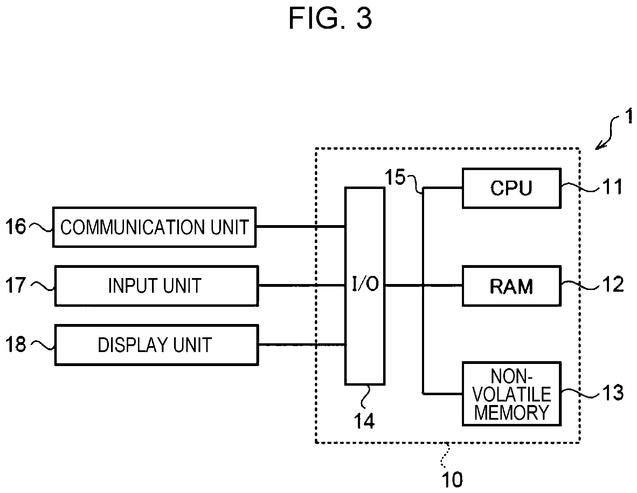

Fig. 3 is a diagram illustrating a major part configuration example of an electrical system of the system 1 constructed using the computer 10.

The computer 10 constituting the system 1 includes a central processing unit (CPU) 11 which is an example of a processor that serves for execution of the function of the system 1. In addition, the computer 10 includes a random access memory (RAM) 12 which is used as a temporary work area of the CPU 11. The computer 10 also includes a non-volatile memory 13, and an input/output interface (I/O) 14. The CPU 11, the RAM 12, the non-volatile memory 13, and the I/O 14 are coupled to each other via a bus 15.

The non-volatile memory 13 is an example of a storage device that retains stored data even if the power supplied to the non-volatile memory 13 is shut off. As the non-volatile memory 13, for example, a semiconductor memory is used, but a hard disk may be used. As in the generative model M, data needs to be stored continuously even with the power supply of the computer 10 shut off is stored in the non-volatile memory 13.

The I/O 14 is connected to e.g., a communication unit 16, an input unit 17, and a display unit 18.

The communication unit 16 is connected to a communication line (illustration is omitted), and includes a communication protocol for transmitting and receiving data to and from an external device connected to the communication line.

The input unit 17 is a device that receives an instruction from a user and notifies the CPU 11 of the instruction. As the input unit 17, e.g., a button, a touch panel, a mouse, a keyboard and a pointing device or the like is used.

The display unit 18 is an example of a display device that displays information processed by the CPU 11 as an image. As the display unit 18, e.g., a liquid crystal display or an organic electro luminescence (EL) display is used.

Note that the units connected to the I/O 14 are not limited to the communication unit 16, the input unit 17, and the display unit 18. A necessary unit is selected according to the function of the system 1, and is connected to the I/O 14.

### <Learning Phase>

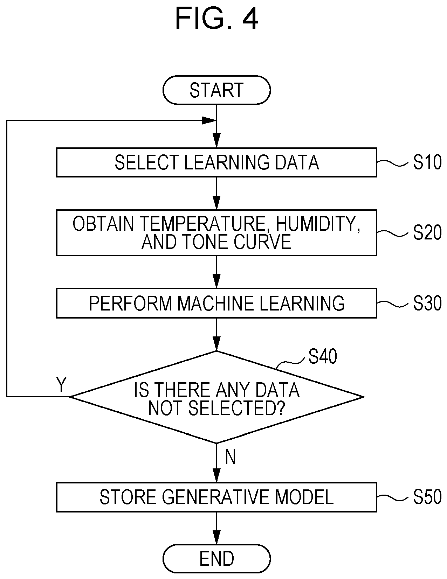

Next, the learning process of the generative model M performed by the system 1 will be described. Fig. 4 is a flowchart illustrating an example of a flow of the learning process of the generative model M, which is executed by the CPU 11 of the computer 10 included in the system 1 when a learning start instruction is received from a user.

An information processing program that defines the learning process of the generative model M is pre-stored, for example, in the non-volatile memory 13 of the computer 10. The CPU 11 reads the information processing program stored in the non-volatile memory 13, and executes the learning process of the generative model M. Note that it is assumed that the non-volatile memory 13 stores the learning data 4 prepared in advance for each color of CMYK. Among CMYK, a color for the tone curve 5 to be generated by machine learning of the generative model M is specified by a user.

First, in step S10 of Fig. 4, the CPU 11 selects one piece of learning data 4 for the color specified by a user
The learning data 4 selected in step S10 is particularly referred to as the "selected learning data 4".

In step S20, the CPU 11 obtains the influential factors and the tone curve 5 included in the selected learning data 4. In the example of the present disclosure, temperature and humidity are obtained as the influential factors.

In step S30, the CPU 11 executes machine learning of the generative model M that, upon input of the temperature and humidity obtained in step S20, generates the tone curve 5 obtained in step S20.

In step S40, the CPU 11 determines whether there is a non-selected piece of learning data 4 in step S10 among the pieces of learning data 4 for the color specified by a user. Where there is a non-selected piece of learning data 4, the flow proceeds to step S10. Thus, one piece of learning data 4 is selected from non-selected pieces of learning data 4 as new selected learning data 4. Subsequently, steps S20 to S40 are executed. Specifically, the CPU 11 executes machine learning of the generative model M using all pieces of learning data 4 prepared in advance for the color specified by a user.

Meanwhile, when it is determined by the determination process in step S40 that there is no non-selected piece of learning data 4, the flow proceeds to step S50.

In step S50, the CPU 11 stores the generative model M that has been machine learned in step S30 in the non-volatile memory 13. Thus, the learning process of the generative model M illustrated in Fig. 4 is completed.

When the learning process of the generative model M illustrated in Fig. 4 is executed for each color of CMYK, the generative model M is obtained for each color.

### <Generation Phase>

When a printing company receives a request for production of new printed material from a customer, the printing company gets the image data of the material to be printed from the customer, and the image data is printed by the image forming apparatus. Meanwhile, the temperature and humidity in a room where the image forming apparatus is installed varies from hour to hour. Therefore, the printing company generates a tone curve 5 every time a printed material is produced.

Hereinafter, the generation process of generating the tone curve 5 according to the values of the influential factors using the generative model M obtained by the learning process of the generative model M illustrated in Fig. 4 will be described.

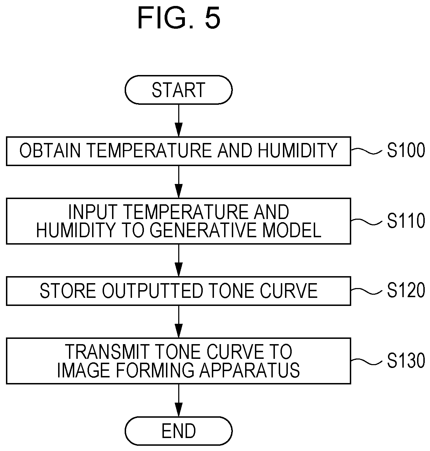

Fig. 5 is a flowchart illustrating an example of a flow of the generation process of the tone curve 5, which is executed by the CPU 11 of the computer 10 included in the system 1 when a generation start instruction is received from a user.

The CPU 11 reads the information processing program stored in the non-volatile memory 13, and executes the generation process of the tone curve 5. Note that it is assumed that the non-volatile memory 13 pre-stores the generative model M for each color of CMYK, which has been generated by the learning process of the generative model M. Among CMYK, a color for the tone curve 5 to be generated is specified by a user.

First, in step S100 of Fig. 5, the CPU 11 obtains the temperature and humidity in the room where the image forming apparatus is installed. Specifically, the CPU 11 obtains the temperature and humidity from a sensor through the communication unit 16, the sensor being connected to the communication line for measuring the temperature and humidity. In this case, the CPU 11 may obtain the temperature and humidity from the same sensor as the one that has measured the temperature and humidity included in the learning data 4. This is because if the temperature and humidity are obtained from another sensor, the relationship between the temperature/humidity and the tone curve 5 deviates from the relationship shown by the learning data 4. For example, the CPU 11 obtains the temperature and humidity from a sensor built in the image forming apparatus. When a sensor is not built in the image forming apparatus, the CPU 11 may obtain the temperature and humidity from a sensor installed in the room.

In step S110, the CPU 11 inputs the temperature and humidity obtained in step S100 to the generative model M corresponding to the color specified by a user. Thus, the tone curve 5 corresponding to the temperature and humidity obtained in step S100 is output from the generative model M.

Note that when the system 1 and the sensor are not connected by the communication line, a user may input the temperature and humidity from the input unit 17 of the system 1.

In step S120, the CPU 11 stores the outputted tone curve 5 in the non-volatile memory 13.

In step S130, the CPU 11 controls the communication unit 16, and transmits the tone curve 5 output from the generative model M to the image forming apparatus through the communication line. Thus, the generation process of the tone curve 5 illustrated in Fig. 5 is completed.

When the generation process of the tone curve 5 illustrated in Fig. 5 is executed for each color of CMYK, the generative model M for each color of CMYK is generated and transmitted to the image forming apparatus. The image forming apparatus corrects the colors of the printed material using the tone curve 5 received from the system 1.

### <Modification 1>

In the above, an example of generation of the tone curve 5 for the influential factor of the temperature and humidity has been described. However, the influential factor is not limited to the temperature and humidity.

For example, color preference may vary with the country to which printed materials are distributed. In general, Asian people tend to prefer a yellowish color to make the skin color look warmer, and healthier. For this reason, the skin color shown on printed materials is often adjusted to a more vivid color.

In contrast, European people tend to prefer a relatively neutral color tone and a natural color. In addition, European people tend to prefer a reddish or a pinkish color as the skin color. For this reason, the skin color shown on printed materials is often adjusted to a more natural and healthy-looking color.

Such national color preference may be due to a biological reason. For example, the eye color is considered to have an effect on perception and preference of color. It is harder for a person with blue eyes to perceive change of contrast than for a person with brown eyes, thus a person with blue eyes relatively tends to prefer a blue color or cool tone colors. In contrast, a person with brown eyes tends to prefer warmer colors.

Due to these reasons, color preference may vary with the country to which printed materials are distributed. Therefore, the name of a country to which printed materials are distributed is also an example of an influential factor.

It is found based on the above discussion that the tone curve 5 for influential factors of the temperature, the humidity, and the name of a country to which printed materials are distributed may be generated.

In this case, the learning data 4 should be prepared in advance, in which the tone curve 5 generated by a skilled worker based on the temperature, humidity, and name of a country to which printed materials are distributed is associated with the temperature, humidity, and name of a country to which printed materials are distributed.

After that, in step S20 of Fig. 4, the CPU 11 obtains, as influential factors, the temperature, humidity, and name of a country where printed materials are distributed which are included in the selected learning data 4. In step S30 of Fig. 4, the CPU 11 executes machine learning of the generative model M that, upon input of the obtained temperature, humidity, and name of a country where printed materials are distributed, generates the tone curve 5 included in the same selected learning data 4. Consequently, the generative model M is obtained, which generates a tone curve 5 for influential factors of the temperature, humidity, and name of a country where printed materials are distributed. The generative model M obtained in this manner is an example of an expanded generative model according to the present disclosure.

In step S100 of Fig. 5 the CPU 11 obtains the temperature, humidity in the room where the image forming apparatus is installed, and the name of a country where printed materials are distributed. The name of a country where printed materials are distributed should be input from the input unit 17 of the system 1 by a user.

In step S110 of Fig. 5, the CPU 11 inputs the obtained temperature, humidity, and name of a country where printed materials are distributed to the generative model M obtained in Modification 1. Thus, the tone curve 5 corresponding to the temperature, humidity, and name of a country where printed materials are distributed is output from the generative model M.

In this manner, in addition to the temperature and humidity, the name of a country where printed materials are distributed is added to the influential factors, and the tone curve 5 of the printed material may be generated based on the temperature, humidity, and name of a country where printed materials are distributed.

### <Modification 2>

As described also in Modification 1, the influential factors are not limited to the temperature and the humidity. The race of people as a distribution target of the printed material is also an example of an influential factor. This is because, as described in Modification 1, when the race is different, the eye color may be different, and the color preference tends to vary.

Therefore, it is found that the tone curve 5 for influential factors of the temperature, humidity, and race of people as a distribution target of the printed material may be generated.

In this case, the learning data 4 should be prepared in advance, in which the tone curve 5 generated by a skilled worker based on the temperature, humidity, and race of people as a distribution target of the printed material is associated with the temperature, humidity, and race of people as a distribution target of the printed material.

After that, in step S20 of Fig. 4, the CPU 11 obtains, as influential factors, the temperature, humidity, and race of people as a distribution target of the printed material which are included in the selected learning data 4. In step S30 of Fig. 4, the CPU 11 executes machine learning of the generative model M that, upon input of the obtained temperature, humidity, and race of people as a distribution target of the printed material, generates the tone curve 5 included in the same selected learning data 4. Consequently, the generative model M is obtained, which generates a tone curve 5 for influential factors of the temperature, humidity, and race of people as a distribution target of the printed material. The generative model M obtained in this manner is an example of an expanded generative model according to the present disclosure.

In step S100 of Fig. 5, the CPU 11 obtains the temperature, humidity in the room where the image forming apparatus is installed, and the race of people as a distribution target of the printed material. The race of people as a distribution target of the printed material should be input from the input unit 17 of the system 1 by a user.

In step S110 of Fig. 5, the CPU 11 inputs the obtained temperature, humidity, and race of people as a distribution target of the printed material to the generative model M obtained in Modification 2. Thus, the tone curve 5 corresponding to the temperature, humidity, and race of people as a distribution target of the printed material is output from the generative model M.

In this manner, in addition to the temperature and humidity, the race of people as a distribution target of the printed material may be added to the influential factors, and the tone curve 5 of the printed material may be generated based on the temperature, humidity, and race of people as a distribution target of the printed material.

### <Other Influential Factors>

The influential factors are not limited to the above-mentioned temperature, humidity, name of a country where printed materials are distributed, and race of people as a distribution target of the printed material.

For example, even if the color is as specified, the color preference may vary with each customer. Such preference of customer may vary depending on the customer type, for example, a customer as a company or a customer as an individual.

When a customer requested for production of printed materials in the past, various requests for the color of printed materials delivered so far may have been made. Therefore, the color preference of a customer may be obtained from the customer's name based on the past requests.

In other words, the customer type and the customer's name that suggest a customer preference are also an example of an influential factor.

In some situations, the color of the printed material should be changed depending on the content to be printed. For example, a requested color may be different between a case where a human is included in the printed material, a case where a scenery is included therein, and a case where food is included therein depending on the content to be printed. For example, in order to emphasize freshness of food, a color higher in chroma than the color of a human or a scenery may be requested for the color of food.

A requested color may vary according to the contrast of an image, or the area of a region filled with the same color, in other words, the amount of solid color.

In other words, the type, contrast of a subject, and the amount of solid color that represent the content to be printed are also an example of an influential factor.

In some situations, the color of the printed material should be changed depending on the usage of the printed material. For example, depending on whether the printed material is a catalog, a poster, or a photobook, the requested color may vary. For example, in a photobook, as compared to a catalog and a poster, the color of the printed material needs to be made closer to the color specified by a customer.

In other words, the usage of the printed material is also an example of an influential factor.

In some situations, the color of the printed material should be changed depending on the color correction profile used by a user. The color correction profile is data that defines the color correction function possessed in advance by the image forming apparatus.

The color correction profile includes e.g., a CMYK input profile, a device link profile, an output profile, and an RGB input profile.

The CMYK input profile is a profile that defines the CMYK target to simulate another print device. The device link profile is a profile that integrates the color characteristic information of a print target and the color characteristic information of an output device. The output profile is a profile that defines the color characteristic of the output device. The RGB input profile is a profile that defines the color space of RGB to be used at the time of printing RGB data.

The profiles included in the color correction profile have multiple types. A user specifies a profile to be used for among the profiles by its profile name. Because the color of the printed material varies with the profile to be used, the correction amount of the color based on the tone curve 5 also needs to be changed.

In other words, the color correction profile to be used by a user, specifically, the CMYK input profile, the device link profile, the output profile, and the RGB input profile are also an example of an influential factor.

In some situations, the color of the printed material should be changed depending on the type of the recording medium used for printing. For example, when the basis weight or the thickness of a sheet of paper changes, which is an example of the recording medium, even if heat is applied to the sheet of paper for the same time to fix an image, the degree of fixing may vary. Some sheets of paper have surfaces coated with paint to show gloss. The gloss level of the paper varies with the coating amount of paint, and when the coating amount of paint changes, even if heat is applied to the sheet of paper for the same time to fix an image, the degree of fixing may vary. When the quality of the pulp used for the sheet of paper varies, even if heat is applied to the sheet of paper for the same time to fix an image, the degree of fixing may vary. Even with the same type of sheet of paper, the land of origin of the pulp may vary due to a difference in manufacturing lot, thus the quality of the pulp may vary. A difference in the degree of fixing of an image onto the sheet of paper changes the color of the printed material, thus the correction amount of the color based on the tone curve 5 also needs to be changed.

In other words, the type of the recording medium used for printing is also an example of an influential factor. The type of the recording medium is expressed using e.g., the basis weight, the thickness, the gloss level of the recording medium, the quality of pulp, and the manufacturing lot. Such specific information related to the recording medium is provided from the original seller of the recording medium.

In some situations, the color of the printed material should be changed depending on the type of color material used for printing. The article number of the color material to be used for the image forming apparatus is specified by the original seller of the image forming apparatus. However, even with the same article number, if the manufacturing lot is different, the characteristics of the color material may vary within an acceptable range. A difference in the characteristics of the color material changes the color of the printed material, thus the correction amount of the color based on the tone curve 5 also needs to be changed.

In other words, the type of the color material used for printing is also an example of an influential factor. The type of color material is expressed using e.g., the manufacturing lot of the color material.

In some situations, the color of the printed material should be changed depending on the characteristics of the image forming apparatus used for printing. For example, a different model of the image forming apparatus used for printing may change the color of the printed material even if the same image data is used. Even with the same model, a different image forming apparatus used for printing may change the color of the printed material even if the same image data is used. Even with the same image forming apparatus, a different number of years of aging of the image forming apparatus may change the color of the printed material even if the same image data is used. In addition, even with the same image forming apparatus, a different number of elapsed days since the last maintenance inspection date may change the color of the printed material even if the same image data is used. Therefore, the correction amount of the color based on the tone curve 5 also needs to be changed according to the difference in the characteristics of the image forming apparatus used for printing.

In other words, the characteristics of the image forming apparatus used for printing is also an example of an influential factor. The characteristics of the image forming apparatus are expressed using e.g., the model, the individual information, the number of years of aging, and the number of elapsed days since the last maintenance inspection date of the image forming apparatus.

In some situations, the color of the printed material should be changed depending on the characteristics of a digital front end (DFE) that performs data processing of image data. For example, a different type of the DFE used for printing may change the color of the printed material even if the same image data is used. Even with the same type, a different version of the DFE used for printing may change the color of the printed material due to an effect of update of software even if the same image data is used. Therefore, the correction amount of the color based on the tone curve 5 also needs to be changed according to a difference in the characteristics of the DFE used for printing.

In other words, the characteristics of the DFE used for printing is also an example of an influential factor. The characteristics of the DFE is expressed using e.g., the type and version of the DFE.

In some situations, the color of the printed material should be changed depending on the characteristics of a raster image processer (RIP) that converts an image represented by vector data to raster data that can be interpreted by the image forming apparatus. For example, a different type of the RIP used for printing may change the color of the printed material even if the same image data is used. Even with the same type, a different version of the RIP used for printing may change the color of the printed material due to an effect of improvement or the like of processing even if the same image data is used. Therefore, the correction amount of the color based on the tone curve 5 also needs to be changed according to a difference in the characteristics of the RIP used for printing.

In other words, the characteristics of the RIP used for printing is also an example of an influential factor. The characteristics of the RIP is expressed using e.g., the type and version of the RIP.

For the purpose of illustration, an influential factor other than the temperature, humidity in the room where the image forming apparatus is installed is referred to as an "additional influential factor".

The system 1 may generate the tone curve 5 by combining at least one of the additional influential factors mentioned above in addition to the temperature, humidity in the room where the image forming apparatus is installed.

In this case, the learning data 4 should be prepared in advance, in which the tone curve 5 generated by a skilled worker based on the temperature, humidity and additional influential factors is associated with the temperature, humidity, and additional influential factors.

After that, in step S20 of Fig. 4, the CPU 11 obtains, as influential factors, the temperature, humidity, and additional influential factors which are included in the selected learning data 4. In step S30 of Fig. 4, the CPU 11 executes machine learning of the generative model M that, upon input of the obtained temperature, humidity, and additional influential factors, generates the tone curve 5 included in the same selected learning data 4. Consequently, the generative model M is obtained, which generates a tone curve 5 for influential factors of the temperature, humidity, and additional influential factors.

In step S100 of Fig. 5, the CPU 11 obtains the temperature, humidity in the room where the image forming apparatus is installed, and the additional influential factors. The additional influential factors should be input from the input unit 17 of the system 1 by a user. Note that when influential factor information including the additional influential factors is stored as data, the CPU 11 may obtain the influential factor information from a storage device. For example, when the influential factor information is stored in the storage device of the image forming apparatus, the CPU 11 controls the communication unit 16 to obtain the influential factor information from the image forming apparatus through the communication line.

In step S110 of Fig. 5, the CPU 11 inputs the obtained temperature, humidity and additional influential factors to the obtained generative model M. Thus, the tone curve 5 corresponding to the temperature, humidity, and additional influential factors is output from the generative model M.

### <Selection of Tone Curve Used for Learning Data>

So far, the tone curve 5 used for the learning data 4 has been adopted which is generated by a skilled worker based on experience and intuition in consideration of the value of each influential factor. However, even if the printed material is produced based on the tone curve 5 generated by a skilled worker, all customers are not necessarily satisfied with the color of the printed material.

Thus, the printing company may interview customers for evaluation of the color of the printed material. The evaluation of the color of the printed material is expressed, for example, by an evaluation value from 0 point to 100 points. An evaluation value of 100 points indicates that a customer gives the highest rating to the color of the printed material. Specifically, the evaluation value is set based on the degree of similarity between the color of an image in the printed material and the color shown by the image data.

A high evaluation value of the color of the printed material indicates that evaluation of the tone curve 5 used for printing is high. On the other hand, a low evaluation value of the color of the printed material indicates that evaluation of the tone curve 5 used for printing is low. In other words, an evaluation value of the color of the printed material is also an evaluation value of the tone curve 5.

In order to increase the evaluation value of the color of the printed material for which color correction has been made based on the tone curve 5 generated by the system 1, machine learning of the generative model M may be performed using the learning data 4 including the tone curve 5 with high evaluation as much as possible.

Therefore, only those tone curves 5 having an evaluation value higher than or equal to a predetermined threshold value are selected from the tone curves 5 generated by a skilled worker, and those tone curves 5 of the learning data 4 may be used.

For example, it is assumed that the threshold value is set to 80 points. In this case, in step S10 of the learning process of the generative model M illustrated in Fig. 4, the CPU 11 selects only those learning data 4 including the tone curves 5 having an evaluation value higher than or equal to 80 points, and executes machine learning of the generative model M.

After that, in step S110 of the generation process of the tone curve 5 illustrated in Fig. 5, the CPU 11 inputs the influential factors to the generative model M obtained from only those learning data 4 including the tone curves 5 having an evaluation value higher than or equal to 80 points, and generates a tone curve 5 corresponding to the influential factors.

Thus, the generative model M is obtained, which generates a tone curve 5 with a higher evaluation value than the evaluation value when the learning data 4 used for the learning process of the generative model M is selected without considering the evaluation value of each tone curve 5. Note that the value of the threshold value is an example, and the threshold value can be changed by a user.

Although an aspect of the system 1 has been described above using the exemplary embodiment, the configuration of the disclosed system 1 is an example. The configuration of the system 1 is not limited to the scope described in the exemplary embodiment. A variety of modifications and improvements can be made to the exemplary embodiment in a range without departing from the gist of the present disclosure. The embodiments to which the modifications and the improvements are made are also included in the technical scope of the disclosure. For example, in a range without departing from the gist of the present disclosure, the order of internal processes in the processes illustrated in Figs. 4 and 5 may be changed.

In the above-described exemplary embodiment, a configuration has been described, in which as an example, the learning process of the generative model M illustrated in Fig. 4, and the generation process of the tone curve 5 illustrated in Fig. 5 are implemented by software. However, processes equivalent to those illustrated in the flowchart may be processed by hardware. In this case, as compared to when each process is implemented by software, faster process is achieved.

In the exemplary embodiments, the processes are performed by any computer. The computer may perform the processes by using a processor serving as hardware, a program serving as software, or combination of these. In this case, the processor is configured to perform the processes in the exemplary embodiments in cooperation with the program and may function as a unit or a means in the exemplary embodiments. The order in which the processor performs the processes is not limited to the described order and may be changed appropriately. The computer may be a general-purpose computer, an application specific computer, a workstation, or another system capable of performing the processes.

The processor may be composed of one or more pieces of hardware, and the type of the hardware is not limited. For example, the processor may be composed of hardware such as a central processing unit (CPU), a micro processing unit (MPU), a programmable logic device such as a field programmable gate array (FPGA), a dedicated circuit for performing specific processing such as an application specific integrated circuit (ASIC), a graphics processing unit (GPU), or a neural processing unit (NPU). Regarding the type of the hardware, different types of hardware may be combined. If multiple pieces of hardware are configured to perform one or more processes of the processor, the multiple pieces of hardware may be present in apparatuses physically away from each other or may be present in one apparatus. In each of exemplary embodiments, the order in which the processor performs the processes is not limited to the order described above and may be changed appropriately. The hardware is composed of electric circuitry in which circuit elements such as semiconductor devices are combined, or the like.

Further, the program may be software such as firmware or microcode. The program may be, for example, a program module group, and the functions thereof may be implemented by processors configured to implement the respective functions. The program may be program code or multiple code segments stored in one or more non-transitory computer readable media (for example, a storage medium or another storage). The program may be stored in such a divided manner in multiple non-transitory computer readable media present in apparatuses physically away from each other. The program code or the code segments may represent a procedure, a function, a sub program, a routine, a subroutine, a module, a software package, a class or any combination of instructions, data structures, or program statements. The program code or the code segment may be connected to another code segment or a hardware circuit by transmitting and/or receiving information, data, an argument, a parameter, or memory content. The program of the present application may be provided as a program product.

In addition, the system 1 may download an information processing program from an external device through the communication unit 16, and may store the downloaded information processing program in the non-volatile memory 13.

The foregoing description of the exemplary embodiments of the present disclosure has been provided for the purposes of illustration and description. It is not intended to be exhaustive or to limit the disclosure to the precise forms disclosed. Obviously, many modifications and variations will be apparent to practitioners skilled in the art. The embodiments were chosen and described in order to best explain the principles of the disclosure and its practical applications, thereby enabling others skilled in the art to understand the disclosure for various embodiments and with the various modifications as are suited to the particular use contemplated. It is intended that the scope of the disclosure be defined by the following claims and their equivalents.

### Appendix

(((1))) An information processing system comprising:
   a processor configured to:
   create learning data in which a temperature and a humidity in a room where a printed material is produced on which an image represented by image data is printed using a printer are associated with a color correction setting value used to make a color of an image in the printed material closer to a color shown by the image data; and generate, by machine learning using the learning data, a generative model that upon input of the temperature and the humidity included in the learning data, generates the color correction setting value associated with the temperature and the humidity which have been input.
(((2))) The information processing system according to (((1))),
   wherein a name of a country where the printed material is distributed is added to the learning data, and
   the processor is configured to generate, by machine learning, a generative model that, upon input of the temperature, the humidity, and the name of the country included in the learning data, generates the color correction setting value associated with the temperature, the humidity, and the name of the country which have been input.
(((3))) The information processing system according to (((1))),
   wherein a race of people as a distribution target of the printed material is added to the learning data, and
   the processor is configured to generate, by machine learning, a generative model that, upon input of the temperature, the humidity, and the race included in the learning data, generates the color correction setting value associated with the temperature, the humidity, and the race which have been input.
(((4))) The information processing system according to any one of (((1))) to (((3))),
   wherein the processor is configured to use, for machine learning of the generative model, the learning data including the color correction setting value with an evaluation value which is set based on a degree of similarity between a color of an image in the printed material and a color shown by the image data, and is higher than or equal to a predetermined threshold value.
(((5))) The information processing system according to (((4))),
   wherein the evaluation value of the color correction setting value is set by an orderer of the printed material.
(((6))) An information processing system comprising:
   a processor configured to perform machine learning using learning data in which a temperature and a humidity in a room where a printed material is produced on which an image represented by image data is printed using a printer are associated with a color correction setting value used to make a color of an image in the printed material closer to a color shown by the image data; create a generative model by the machine learning, which generates the color correction setting value based on the temperature and the humidity; and generate, using the generative model, the color correction setting value used for new production of the printed material based on the temperature and the humidity at a time of new production of the printed material.
(((7))) The information processing system according to (((6))),
   wherein the processor is configured to, by machine learning using the learning data to which a name of a country where the printed material is distributed is added, create an expanded generative model in which the generative model is expanded so as to generate the color correction setting value based on the temperature, the humidity, and the name of the country; and generate, using the expanded generative model, the color correction setting value used for new production of the printed material based on the temperature and the humidity at a time of new production of the printed material, and the name of the country where the printed material is newly distributed.
(((8))) The information processing system according to (((6))),
   wherein the processor is configured to, by machine learning using the learning data to which a race of people as a distribution target of the printed material is added, create an expanded generative model in which the generative model is expanded so as to generate the color correction setting value based on the temperature, the humidity, and the race; and generate, using the expanded generative model, the color correction setting value used for new production of the printed material based on the temperature and the humidity at a time of new production of the printed material, and the race of people as a distribution target of the printed material.
(((9))) The information processing system according to any one of (((6))) to (((8))),
   wherein the generative model is generated by machine learning using the learning data including the color correction setting value with an evaluation value which is set based on a degree of similarity between a color of an image in the printed material and a color shown by the image data, and is higher than or equal to a predetermined threshold value.
(((10))) The information processing system according to (((9))),
   wherein the evaluation value of the color correction setting value is set by an orderer of the printed material.
(((11))) An information processing program causing a computer to execute a process comprising: creating learning data in which a temperature and a humidity in a room where a printed material is produced on which an image represented by image data is printed using a printer are associated with a color correction setting value used to make a color of an image in the printed material closer to a color shown by the image data; and generating, by machine learning using the learning data, a generative model that, upon input of the temperature and the humidity included in the learning data, generates the color correction setting value associated with the temperature and the humidity which have been input.
(((12))) An information processing program causing a computer to execute a process comprising: performing machine learning using learning data in which a temperature and a humidity in a room where a printed material is produced on which an image represented by image data is printed using a printer are associated with a color correction setting value used to make a color of an image in the printed material closer to a color shown by the image data; using a generative model generated by the machine learning, that generates the color correction setting value based on the temperature and the humidity; and generating the color correction setting value used for new production of the printed material based on the temperature and the humidity at a time of new production of the printed material.

With the information processing system according to (((1))), the information processing system according to (((6))), the information processing program according to (((11))), and the information processing program according to ((12)), the effect is created that color correction setting values can be generated by a non-expert who is not engaged in generation of color correction setting values.

With the information processing system according to (((2))) and the information processing system according to (((3))), the effect is created that a generative model can be obtained, which generates a color correction setting value that achieves a printing color according to the preference of an orderer rather than a generative model that has performed machine learning using temperature and humidity as input data.

With the information processing system according to (((4))), the effect is created that a generative model can be obtained, which generates a color correction setting value with a higher evaluation value than the evaluation value when learning data to be used for machine learning of a generative model is selected without considering the evaluation value of each color correction setting value.

With the information processing system according to (((5))), the effect is created that a generative model can be obtained, which generates a color correction setting value that reflects the evaluation of the colors of the printed material by an orderer.

With the information processing system according to (((7))) and the information processing system according to (((8))), the effect is created that a color correction setting value can be generated, which achieves a printing color according to the preference of an orderer rather than a color correction setting value generated based on the temperature and humidity.

With the information processing system according to (((9))), the effect is created that a color correction setting value can be obtained, which is higher in evaluation value than the color correction setting value generated using a generative model trained by machine learning without considering the evaluation value of each color correction setting value.

With the information processing system according to (((10))), the effect is created that a color correction setting value can be generated, which reflects the evaluation of the colors of the printed material by an orderer.

## Claims

1. An information processing system comprising:
a processor configured to:
create learning data in which a temperature and a humidity in a room where a printed material is produced on which an image represented by image data is printed using a printer are associated with a color correction setting value used to make a color of an image in the printed material closer to a color shown by the image data; and
generate, by machine learning using the learning data, a generative model that upon input of the temperature and the humidity included in the learning data, generates the color correction setting value associated with the temperature and the humidity which have been input.

2. The information processing system according to claim 1,
wherein a name of a country where the printed material is distributed is added to the learning data, and
the processor is configured to generate, by machine learning, a generative model that, upon input of the temperature, the humidity, and the name of the country included in the learning data, generates the color correction setting value associated with the temperature, the humidity, and the name of the country which have been input.

3. The information processing system according to claim 1,
wherein a race of people as a distribution target of the printed material is added to the learning data, and
the processor is configured to generate, by machine learning, a generative model that, upon input of the temperature, the humidity, and the race included in the learning data, generates the color correction setting value associated with the temperature, the humidity, and the race which have been input.

4. The information processing system according to any one of claims 1 to 3,
wherein the processor is configured to use, for machine learning of the generative model, the learning data including the color correction setting value with an evaluation value which is set based on a degree of similarity between a color of an image in the printed material and a color shown by the image data, and is higher than or equal to a predetermined threshold value.

5. The information processing system according to claim 4,
wherein the evaluation value of the color correction setting value is set by an orderer of the printed material.

6. An information processing system comprising:
a processor configured to:
perform machine learning using learning data in which a temperature and a humidity in a room where a printed material is produced on which an image represented by image data is printed using a printer are associated with a color correction setting value used to make a color of an image in the printed material closer to a color shown by the image data;
create a generative model by the machine learning, which generates the color correction setting value based on the temperature and the humidity; and
generate, using the generative model, the color correction setting value used for new production of the printed material based on the temperature and the humidity at a time of new production of the printed material.

7. The information processing system according to claim 6,
wherein the processor is configured to, by machine learning using the learning data to which a name of a country where the printed material is distributed is added, create an expanded generative model in which the generative model is expanded so as to generate the color correction setting value based on the temperature, the humidity, and the name of the country; and generate, using the expanded generative model, the color correction setting value used for new production of the printed material based on the temperature and the humidity at a time of new production of the printed material, and the name of the country where the printed material is newly distributed.

8. The information processing system according to claim 6,
wherein the processor is configured to, by machine learning using the learning data to which a race of people as a distribution target of the printed material is added, create an expanded generative model in which the generative model is expanded so as to generate the color correction setting value based on the temperature, the humidity, and the race; and generate, using the expanded generative model, the color correction setting value used for new production of the printed material based on the temperature and the humidity at a time of new production of the printed material, and the race of people as a distribution target of the printed material.

9. The information processing system according to any one of claims 6 to 8,
wherein the generative model is generated by machine learning using the learning data including the color correction setting value with an evaluation value which is set based on a degree of similarity between a color of an image in the printed material and a color shown by the image data, and is higher than or equal to a predetermined threshold value.

10. The information processing system according to claim 9,
wherein the evaluation value of the color correction setting value is set by an orderer of the printed material.

11. An information processing program causing a computer to execute a process comprising:
creating learning data in which a temperature and a humidity in a room where a printed material is produced on which an image represented by image data is printed using a printer are associated with a color correction setting value used to make a color of an image in the printed material closer to a color shown by the image data; and generating, by machine learning using the learning data, a generative model that, upon input of the temperature and the humidity included in the learning data, generates the color correction setting value associated with the temperature and the humidity which have been input.

12. An information processing program causing a computer to execute a process comprising:
performing machine learning using learning data in which a temperature and a humidity in a room where a printed material is produced on which an image represented by image data is printed using a printer are associated with a color correction setting value used to make a color of an image in the printed material closer to a color shown by the image data; using a generative model generated by the machine learning, that generates the color correction setting value based on the temperature and the humidity; and generating the color correction setting value used for new production of the printed material based on the temperature and the humidity at a time of new production of the printed material.

13. An information processing method comprising:
creating learning data in which a temperature and a humidity in a room where a printed material is produced on which an image represented by image data is printed using a printer are associated with a color correction setting value used to make a color of an image in the printed material closer to a color shown by the image data; and generating, by machine learning using the learning data, a generative model that, upon input of the temperature and the humidity included in the learning data, generates the color correction setting value associated with the temperature and the humidity which have been input.
